# EUROPÄISCHE PATENTSCHRIFT

(11) **EP 2 743 870 B1**
(45) Veröffentlichungstag und Bekanntmachung des Hinweises auf die Patenterteilung: **14.08.2019**
(21) Anmeldenummer: 13193272.5
(22) Anmeldetag: 18.11.2013
(51) Int. Cl.: H04M 3/24, H04M 3/08

(54) **Vorrausschauende Servicebenachrichtigung**
Advance service notification
Annonce prédictive

(30) Priorität: 13.12.2012 DE 102012024392
(43) Veröffentlichungstag der Anmeldung: 18.06.2014
(73) Patentinhaber: Heidelberger Druckmaschinen AG, 69115 Heidelberg (DE)
(72) Erfinder: Schumacher-Wirges, Wilfried, 53894 Mechernich (DE); Lemke, Marika, 68753 Waghäusel (DE)

(56) Entgegenhaltungen:
- DE-A1-102006 022 710
- US-A1- 2003 055 666
- US-A1- 2004 098 400
- US-A1- 2005 066 241

## Beschreibung

Die vorliegende Erfindung betrifft ein Verfahren zur Instandhaltung von Maschinen mit einem Maschinenrechner unter Einsatz wenigstens eines Fernwartungsrechners, wobei dem Fernwartungsrechner vom Maschinenrechner Informationen bezüglich des Zustands der Maschine zugeleitet und in ein Serviceticket übernommen werden.

Moderne Produktionsmaschinen wie z. B. Druckmaschinen laufen meist im Mehrschichtenbetrieb, um die hohen Investitionskosten zu amortisieren. Dabei ist es wichtig, dass die Produktionsmaschine möglichst fehlerfrei und ohne Ausfälle und damit Stillstand läuft. Um auf einen Ausfall schnell reagieren zu können, hat sich die Fernwartungstechnik etabliert, bei der Daten der zu wartenden Maschine an einen Fernwartungsrechner übertragen werden, welcher daraus den Zustand der Maschine beurteilt. Bei Wartungs- oder Reparaturbedarf werden entsprechende Aufträge erteilt und Hilfestellungen gegeben. Ein derartiges Verfahren zur Fernwartung ist aus dem Patent US 7, 328,347 B2 bekannt, bei dem über einen Fernwartungsrechner eine Maschine bedient werden kann. Auf diese Art und Weise kann Servicepersonal vor dem Fernwartungsrechner Einstellungen an einer Maschine verändern ohne vor Ort sein zu müssen, wodurch Reise- und damit Servicekosten gespart werden können. Dieses Patent stellt dabei sicher, dass von dem Fernwartungsrechner aus nur solche Vorgänge ausgelöst werden können, welche Personen an der Maschine nicht gefährden. Auf diese Art und Weise wird eine sichere Fernwartung ermöglicht, ohne Bedienpersonal vor Ort zu gefährden.

Aus dem Patent US 7,287,473 B2 geht ein Verfahren zur Erfassung von Betriebsdaten einer Maschine hervor. Die erfassten Betriebsdaten können dazu genutzt werden, Wartungsvorgänge aus der Ferne einzuleiten oder den aktuellen Zustand der Maschine zu beurteilen.

Die Offenlegungsschrift DE 10 2010 024 275 A1 offenbart ein Wartungsverfolgungssystem, bei dem ein Wartungsticket erstellt wird, welches mit Betriebsdaten verknüpft werden kann, wobei die verknüpften Daten dann einer Fehlerdiagnose unterzogen werden. Auf diese Art und Weise ist es möglich, Servicetickets mit den Einträgen in einer SAP Datenbank zu verknüpfen und so den Wartungsvorgang nachverfolgen zu können, so dass jederzeit der aktuelle Stand des Wartungsvorgangs nachgeprüft werden kann. Auf diese Art und Weise ist eine lückenlose Verfolgung des Wartungsvorgangs möglich.

Aus der Patentanmeldung US 2004/0098400A1 gehen ein System und ein Verfahren zum Durchführen von Service- und Wartungsdienstleistungen hervor, bei dem Fehlermeldungen, Stände von Verbrauchsmaterialien und Beschaffenheit eines zu wartenden Geräts, wie z. B. eines Kopierers, über ein Netzwerk wie das Internet an einen Fernwartungsrechner übertragen werden. Diese Daten werden in einer Datenbank abgelegt, so dass Maschinendaten und Fehlerdaten miteinander verknüpft werden können. Im Falle eines Fehlers im Kopierer wird eine entsprechende Fehlermeldung an den Wartungsrechner übertragen, ebenso wird ein zu niedriger Stand von Verbrauchsmaterialien an den Wartungsrechner übertragen. Aus diesen Daten werden die benötigen Wartungs- und Servicedienstleistungen berechnet und gegebenenfalls computergesteuert vom Fernwartungsrechner am Rechner des Kopierers vorgenommen.

Aus der Offenlegungsschrift DE 10 2006 022 710 A1 geht ein Verfahren zur Durchführungen von Wartungs- oder Servicevorgängen bei Maschinen hervor, wobei die Maschine über einen Rechner verfügt und dieser Rechner über ein öffentlich zugängliches Netzwerk mit einem Verwaltungsrechner kommuniziert. Der Verwaltungsrechner überprüft dabei bei Wartungs- und Servicebedarf des Maschinenrechners, ob der Status der Maschine eine Berechtigung enthält, die angeforderten Wartungs- und Servicedienstleistungen abzurufen. Weiterhin ist vorgesehen, dass der Verwaltungsrechner anhand einer Fehlermeldung des Maschinenrechners eine Checkliste zur Abarbeitung der notwendigen Service- und Wartungsmaßnahmen erstellt und an den Rechner der Maschine versendet.

Aus der Patentanmeldung US 2005/0066241 A1 gehen ein Verfahren und ein System zur Erkennung sich anbahnender Fehler in einem Produktionssystem einer Fabrik hervor. Die Produktionsanlagen werden dabei von einem Rechner online überwacht, wobei sich anbahnende Fehler mit Fehlermustern verglichen werden, um sich anbahnende Fehler vorhersagen zu können. Die Muster zur Fehlererkennung können dabei während des Betriebs verbessert werden, um die Erkennung sich anbahnender Fehler zukünftig zu verbessern.

Aus der offengelegten Patentanmeldung US 2003/0055666 A1 gehen ein computergestütztes Verfahren und System zur Identifizierung und Bewertung von Reparaturen hervor, welche höchstwahrscheinlich einen Ausfall eines mobilen Geräts vermeiden. Das Verfahren erlaubt das Sammeln von Daten, welche auf eine bevorstehende Fehlfunktion des mobilen Geräts schließen lassen. Das Verfahren umfasst weiterhin das Sammeln von Nutzerdaten bezüglich eines Nutzungsprofils des mobilen Geräts. Die Nutzerdaten werden im Vergleich mit historischen Daten entsprechend weiterer mobiler Geräte verarbeitet, um ein Nutzerprofil des mobilen Geräts zu erstellen. Die Daten zur Wahrscheinlichkeit eines bevorstehenden Ausfalls werden verarbeitet, um den Ausfall des mobilen Geräts vorhersagen zu können und wenigstens eine Reparaturmöglichkeit zu bestimmen, welche den Ausfall des mobilen Geräts vermeiden würde. Weiterhin wird eine Gewichtung der Reparatur vorgenommen, welche die Wahrscheinlichkeit berücksichtigt, dass die Reparatur den vorhergesagten Ausfall vermeidet. Diese Reparaturgewichtung wird anhand des Benutzerprofils des beweglichen Geräts verändert und angepasst, wobei die angepasste Reparaturgewichtung dazu benutzt wird, die Notwendigkeit der Reparatur zu beurteilen.

Es ist Aufgabe der vorliegenden Erfindung, ein Verfahren zur Instandhaltung von Maschinen mit einem Maschinenrechner unter Einsatz wenigstens eines Fernwartungsrechners zu schaffen, welches möglichst frühzeitig auftretende Probleme erkennen und behandeln kann.

Die Aufgabe wird erfindungsgemäß durch Patentanspruch 1 gelöst. Vorteilhafte Ausgestaltungen der Erfindung ergeben sich aus den Unteransprüchen und den Zeichnungen. Bei dem erfindungsgemäßen Verfahren ist die zu betreuende Maschine mit einem Maschinenrechner ausgestattet, welcher über eine Datenverbindung, insbesondere das Internet, mit einem Fernwartungsrechner kommuniziert. Der Fernwartungsrechner steht z. B. beim Hersteller der Maschine oder bei einem Servicepartner des Maschinenherstellers. Der Fernwartungsrechner erhält vom Maschinenrechner über das Internet nach einer bestimmten Regel Informationen über den aktuellen Zustand der Maschine, wobei diese Informationen in ein Serviceticket übernommen werden. Dabei werden gemäß der vorliegenden Erfindung bereits Informationen über einen sich anbahnenden Fehler erfasst und an den Fernwartungsrechner weitergeleitet, so dass der Fernwartungsrechner frühzeitig Maßnahmen zur Vermeidung oder Beseitigung des sich anbahnenden Fehlers berechnen und zur Verfügung stellen kann. Auf diese Art und Weise können auftretende Probleme vorhergesagt werden, so dass der Fernwartungsrechner möglichst proaktiv den passenden Servicebedarf berechnen und bereitstellen kann. Dabei werden insbesondere auch hinterlegte Service- und Wartungspläne mit bestimmten Datumsintervallen berücksichtigt, soweit der zeitliche Horizont des sich anbahnenden Fehlers dies ermöglicht. Sollte der Fehler zu erwartbaren Problemen vor dem nächsten Wartungsintervall führen, so kann der Wartungsbedarf nicht bis zu diesem Intervall verschoben werden und wird stattdessen zu einem früheren Zeitpunkt durchgeführt. Bei der vorliegenden Erfindung ist dazu vorgesehen, dass der Betriebszustand der Maschine regelmäßig erfasst wird. Dies kann z. B. in kurzen Intervallen passieren, bei denen eine bestimmte Anzahl und Typ von Parametern der Maschine im laufenden Betrieb erfasst und mit vorgegebenen Soll-Werten verglichen werden. Sobald die erfassten Parameter von den Soll-Werten zu sehr abweichen, wird von einem sich anbahnenden Problem ausgegangen und ein entsprechendes Serviceticket auf dem Fernwartungsrechner geöffnet.

In einer besonders vorteilhaften Ausgestaltung der Erfindung ist vorgesehen, dass vom Fernwartungsrechner oder dem Maschinenrechner aus gesteuert bei Ereignissen, welche auf einen sich anbahnenden Fehler schließen lassen, eine Servicebenachrichtigung in einer Datenbank angelegt wird, welche mit dem Fernwartungsrechner kommuniziert. Diese Servicebenachrichtigung wird nach den zuvor genannten Kriterien erstellt, bei denen Maschinenparameter mit Soll-Werten verglichen werden und daraus der Bedarf für zu erwartende Service und Wartungsmaßnahmen abgeleitet wird. Die Datenbank kann dabei Bestandteil des Fernwartungsrechners sein oder auf einem separaten Rechner liegen. Insbesondere kann diese Datenbank auch dazu genutzt werden, die sich anbahnenden Fehler bzw. Symptome zu erfassen und mit hinterlegten Kriterien abzugleichen, um den Wartungsbedarf zu erkennen.

In einer weiteren Ausgestaltung der vorliegenden Erfindung ist vorgesehen, dass die Servicebenachrichtigung zu einem bestimmten vorgegebenen Zeitpunkt vor Fernwartungsrechner abgearbeitet wird und dass bis zu diesem Zeitpunkt die Servicebenachrichtigung aufgrund von Informationen über den aktuellen Maschinenzustand aktualisiert wird. Dieser Zeitpunkt stimmt üblicherweise mit dem nächsten Wartungs- bzw. Serviceintervall überein, so dass nach Möglichkeit zusätzliche Einsätze von Servicepersonal vor Ort an der Maschine vermieden werden können. Solange der vorgegebene Zeitpunkt noch nicht erreicht wurde, wird die Servicebenachrichtigung aufgrund von Informationen über den aktuellen Maschinenzustand aktualisiert, so dass zu dem Zeitpunkt der Abarbeitung der Servicebenachrichtigung immer der tatsächliche, aktuelle Maschinenzustand berücksichtigt werden kann.

In einer weiteren Ausgestaltung der vorliegenden Erfindung ist vorgesehen, dass der Fernwartungsrechner auf Basis der Servicebenachrichtigung eine Aufgabenliste erstellt, um den sich anbahnenden Fehler zu vermeiden oder nötige Wartungsvorgänge an der Maschine zu ermöglichen. Diese Aufgabenliste enthält Maßnahmen, mit welchen der sich anbahnende Fehler vermeiden lässt oder, wenn das Problem bereits eingetreten ist, sich dieses Problem beheben lässt. Dabei können die Maßnahmen der Aufgabenliste vor Ort vom Wartungspersonal des Herstellers durchgeführt werden oder als Maßnahmen zur Selbsthilfe vom Maschinenbetreiber. Auf die gleiche Art und Weise kann die Aufgabenliste auch zusätzlich eine Teileliste von Ersatzteilen enthalten, welche ausgetauscht werden müssen. Auf diese Art und Weise erhält insbesondere das Servicepersonal des Herstellers gleich die passende Ersatzteilliste und kann somit mit den passenden Ersatzteilen ausgerüstet vor Ort den Service durchführen.

Vorteilhafterweise ist weiterhin vorgesehen, dass der Fernwartungsrechner ein ERP-System, insbesondere ein SAP System, umfasst und dass die berechnete Aufgabenliste in dem ERP-System bereitgestellt wird. Die Verwendung eines ERP-Systems hat den großen Vorteil, dass hierin auch die Daten der Ersatzteile abgelegt sind und außerdem so der Wartungs- und Servicevorgang jederzeit nachvollzogen und kontrolliert werden kann. Auf diese Art und Weise können die Daten der Servicebenachrichtigung und der Ersatzteile verknüpft werden und jederzeit überprüft werden.

In einer weiteren Ausgestaltung der vorliegenden Erfindung ist vorgesehen, dass unterschiedliche Servicebenachrichtigungen in Abhängigkeit der Schwere erkannter Fehlermeldungen oder zu erwartender Fehler erzeugt und im Fernwartungsrechner abgespeichert werden. So können die unterschiedlichen Servicebenachrichtigungen mit unterschiedlichen Prioritäten versehen werden, so dass Servicebenachrichtigungen, welche auf einen schweren Fehler lassen, mit einer höheren zeitlichen Priorität versehen werden.

Desweiteren ist in der vorliegenden Erfindung vorgesehen, dass der vorgegebene Zeitpunkt dann nicht abgewartet wird, wenn ein Maschinenausfall vor dem vorgegebenen Zeitpunkt zu erwarten ist, und dass in diesem Fall im Fernwartungsrechner eine entsprechende Störmarkierung gesetzt wird. Wenn sich ein schwerer Fehler anbahnt, welcher mit hoher Wahrscheinlichkeit vor dem nächsten vorgesehenen Serviceintervalls zu einem Ausfall der Maschine oder einem größeren Schaden führen würde, so wird aufgrund dieser festgestellten Tatsache eine entsprechende Störmarkierung im Fernwartungsrechner gesetzt. Mit dieser Störmarkierung wird die sofortige Abarbeitung der Servicebenachrichtigung in die Wege geleitet, so dass ohne weitere Verzögerung die notwendigen Wartungsmaßnahmen durchgeführt werden können.

In einer weiteren Ausführungsform der vorliegenden Erfindung ist vorgesehen, dass der Zeitpunkt nach vorne verlegt wird, wenn sich eine höhere Ausfallwahrscheinlichkeit der Maschine aufgrund der durch ergänzte Angaben zum Maschinenzustand aktualisierten Servicebenachrichtigung ergibt. Auch in diesem Fall wird nicht an dem aufgrund der zum Zeitpunkt der Erstellung der Servicebenachrichtigung vorliegenden Maschinendaten berechneten Zeitpunkt festgehalten, sondern vielmehr werden die ergänzten Daten der aktualisierten Servicebenachrichtigungen herangezogen, deren Basis eine höhere Ausfallwahrscheinlichkeit der Maschine ergeben hat. Aufgrund der höheren Ausfallwahrscheinlichkeit wird dann der Zeitpunkt der Wartung nach vorne verlegt, um einen Maschinenausfall zu vermeiden.

Bei der vorliegenden Erfindung kann vorgesehen sein, dass vor der Versendung der Aufgabenliste und Erstellung der Ersatzteilliste für den Serviceeinsatz nach der automatischen Erstellung des Serviceauftrags am Fernwartungsrechner oder einem verbundenen Rechner zunächst ein Freigabefeld erscheint, so dass das Wartungspersonal vor dem Fernwartungsrechner zunächst die Aufgabenliste, die Teileliste und den erstellten Serviceauftrag auf Richtigkeit überprüfen kann. Erst nach Erteilung der Freigabe durch das Servicepersonal wird dann der Serviceauftrag auch verschickt.

Die vorliegende Erfindung wird nachfolgend anhand mehrerer Figuren näher beschrieben und erläutert. Es zeigen:
- Figur 1: eine Druckmaschine, welche über das Internet an einen Fernwartungsrechner angeschlossen ist,
- Figur 2: eine erste Ausführungsform eines erfindungsgemäßen Verfahrens zur Instandhaltung von Maschinen und
- Figur 3: eine zweite Ausführungsform der vorliegenden Erfindung.

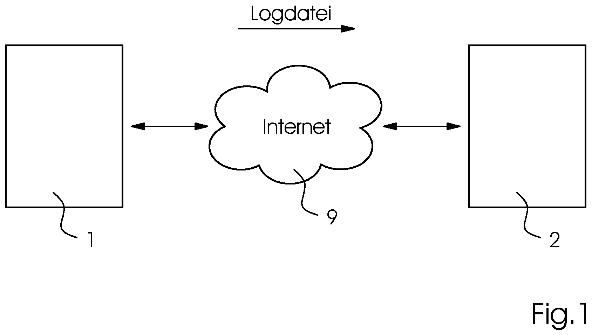

In Figur 1 ist schematisch der Aufbau eines einfachen Fernwartungssystems abgebildet. Dabei ist eine Druckmaschine 1 mit zugeordnetem Maschinenrechner über das Internet 9 mit einem Fernwartungsrechner 2 beim Maschinenhersteller verbunden. Der Fernwartungsrechner 2 kann aus mehreren Rechnern bestehen, insbesondere kommuniziert der Fernwartungsrechner 2 mit mehreren Servern, welche Datenbanken enthalten. Die Druckmaschine 1 steht in einer Druckerei und ist dort meist an das Intranet der Druckerei angeschlossen, welches wiederum mit dem Internet 9 in Verbindung steht. Auf diese Art und Weise können die Daten des aktuellen Maschinenzustands der Druckmaschine 1 jederzeit über das Internet 9 an den Fernwartungsrechner 2 übertragen werden.

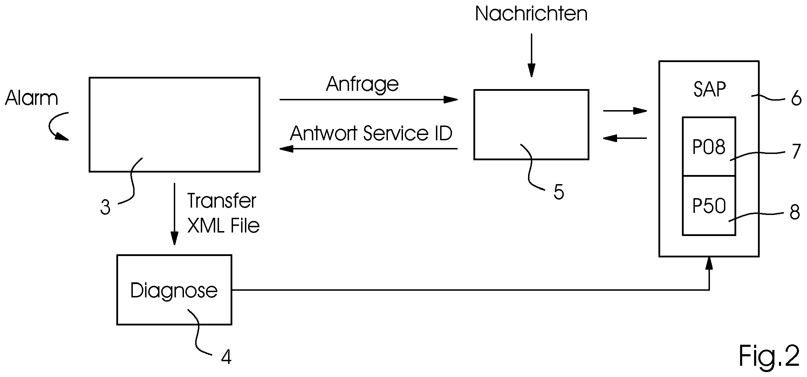

In Figur 2 wird der Fernwartungsrechner 2 detaillierter dargestellt. Es ist zu erkennen, dass der Fernwartungsrechner 2 tatsächlich aus mehreren Rechners bzw. Servern besteht. Ein eingehendes Alarmsignal, welches aufgrund erfasster Zustandsdaten der Druckmaschine 1 generiert wurde, wird in der Remote Monitoring Datenbank 3 erzeugt. Dieses Alarmsignal wird auf Basis hinterlegter Regeln erzeugt, wobei grundsätzlich die aktuellen Maschinenzustandsdaten mit den hinterlegten Soll-Daten verglichen werden. Wenn hier Abweichungen festgestellt werden, welche ein tolerierbares Maß überschreiten, ist von einem Problem bzw. einem sich anbahnenden Fehler auszugehen und ein entsprechendes Alarmsignal wird generiert. In der Remote Monitoring Datenbank 3 wird die Erstellung einer Servicemeldung ausgelöst und dazu eine entsprechende Anfrage über einen SAP Adapter 5 an das SAP System 6 gerichtet. Das SAP System 6 enthält ein Modul 8 zur Verwaltung der Servicebenachrichtigung. Mit dieser Servicebenachrichtigung werden die Daten des aktuellen Maschinenzustands erfasst und solange aktualisiert, bis ein vorgegebener Zeitpunkt zur Abarbeitung erreicht ist, welcher üblicherweise mit vorgegebenen Service- und Wartungsintervallen korrespondiert. Sollte sich der Wartungsbedarf beschleunigen, so kann dieser Zeitpunkt jedoch auch vorverlegt werden. In dem SAP System 6 ist außerdem ein Modul 7 vorhanden, welches die Maschinenzuordnung der Servicebenachrichtigung sicherstellt, so dass die Maschinennummer und die Nummer der Servicebenachrichtigung korrekt miteinander verbunden sind. Die Aktualisierung der Servicebenachrichtigung im Modul 8 erfolgt dabei über Daten von einem Diagnoseserver 4. Der Diagnoseserver 4 erhält dazu von der Remote Monitoring Datenbank 3 den eingehenden Alarm und beginnt die mitgeteilten Daten nach vorgegebenen Regeln zu untersuchen und eine Diagnose zu erstellen. Diese Diagnose enthält insbesondere eine Abschätzung, ob aufgrund der eingegangenen Daten mit einem Maschinenausfall zu rechnen ist und ob dieser Maschinenausfall vor dem vorgegebenen Zeitpunkt der Abarbeitung der Servicemeldung liegen könnte. Diese Diagnose wird dann vom Diagnoseserver 4 an das SAP System 6 verschickt und dort von dem Modul 8 abgearbeitet, so dass die Servicebenachrichtigung gegebenenfalls aktualisiert wird. Auf diese Art und Weise wird die Servicebenachrichtigung im SAP System 6 auf dem aktuellen Stand gehalten, so dass bei der Erstellung eines Serviceauftrags auf Basis der Servicebenachrichtigung immer die aktuellen Daten zur Verfügung stehen. Weiterhin übermittelt der SAP Adapter 5 zur Identifizierung der Servicebenachrichtigung die zugehörige Service ID an die Remote Monitoring Datenbank 3, so dass die dort eingehenden Daten mit der entsprechenden Service ID versehen und korrekt zugeordnet werden können.

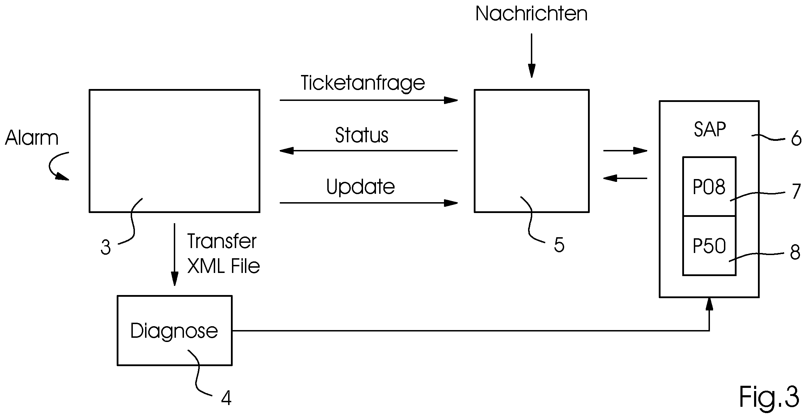

Eine zweite Ausführungsform in Figur 3 unterscheidet sich von der Ausgestaltung in Figur 2 dadurch, dass vom SAP Adapter 5 zusätzlich Statusdaten an die Remote Monitoring Datenbank 3 übertragen werden. Diese Statusdaten werden in der Remote Monitoring Datenbank aktualisiert und mit der zugehörigen ID der Servicebenachrichtigung wiederum über den SAP Adapter 5 an das SAP System 6 übermittelt. Sobald der vorgegebene Servicezeitpunkt erreicht ist oder sich das Problem soweit entwickelt hat, dass vor dem vorgegebenen Zeitpunkt entsprechende Wartungsmaßnahmen vorgenommen werden müssen, wird vom SAP System 6 auf Basis der Servicebenachrichtigung ein Serviceauftrag erstellt und gegebenenfalls nach Freigabe durch das Wartungspersonal vom Fernwartungsrechner 2 über das Internet 9 an die Druckmaschine 1 übertragen. Zusätzlich kann noch Wartungspersonal zur Druckmaschine 1 geschickt werden, um die übermittelten Wartungsvorgänge vor Ort durchzuführen und gegebenenfalls Ersatzteile auszutauschen. Die durchgeführten Wartungsvorgänge und ausgetauschten Ersatzteile können dann vor Ort protokolliert werden und über das Internet 9 wiederum an den Fernwartungsrechner 2 übertragen werden und so im SAP System 6 abgespeichert werden, um den Maschinenzustand hinsichtlich Wartungsvorgängen und Ersatzteilen im SAP System 6 aktuell halten zu können.

### Bezugszeichenliste

- 1: Druckmaschine
- 2: Fernwartungsrechner
- 3: Remote Monitoring Datenbank
- 4: Diagnoseserver
- 5: SAP Adapter
- 6: SAP System
- 7: Modul zur Maschinenzuordnung
- 8: Modul zur Servicebenachrichtigung
- 9: Internet

## Patentansprüche

1. Verfahren zur Instandhaltung von Maschinen (1) mit einem Maschinenrechner unter Einsatz wenigstens eines Fernwartungsrechners (2), wobei dem Fernwartungsrechner (2) vom Maschinenrechner Informationen bezüglich des Zustands der Maschine (1) zugeleitet und in ein Serviceticket übernommen werden,
wobei die an den Fernwartungsrechner (2) übertragenen Informationen zumindest Informationen über einen sich anbahnenden Fehler in der Maschine (1) enthalten und wobei der Fernwartungsrechner (2) Daten zur Vermeidung oder Beseitigung des sich anbahnenden Fehlers berechnet und zur Verfügung stellt, wobei vom Fernwartungsrechner (2) oder dem Maschinenrechner aus gesteuert bei Ereignissen, welche auf einen sich anbahnenden Fehler schließen lassen, eine Servicebenachrichtigung in einer Datenbank (6) angelegt wird, welche mit dem Fernwartungsrechner (2) kommuniziert,
**dadurch gekennzeichnet,**
**dass** die Servicebenachrichtigung zu einem bestimmten vorgegebenen Zeitpunkt vom Fernwartungsrechner (2) abgearbeitet wird und dass bis zu diesem Zeitpunkt die Servicebenachrichtigung aufgrund von Informationen über den aktuellen Maschinenzustand aktualisiert wird.

2. Verfahren nach Anspruch 1,
**dadurch gekennzeichnet,**
**dass** mittels des Maschinenrechners der Betriebszustand der Maschine (1) regelmäßig erfasst wird.

3. Verfahren nach Anspruch 1 oder 2,
**dadurch gekennzeichnet,**
**dass** der Fernwartungsrechner (2) auf Basis der Servicebenachrichtigung eine Aufgabenliste erstellt, um den sich anbahnenden Fehler zu vermeiden oder nötige Wartungsvorgänge an der Maschine (1) zu ermöglichen.

4. Verfahren nach Anspruch 3,
**dadurch gekennzeichnet,**
**dass** der Fernwartungsrechner (2) ein ERP-System (6) umfasst und dass die berechnete Aufgabenliste in dem ERP-System (6) bereitgestellt wird.

5. Verfahren nach einem der Ansprüche 1 bis 4,
**dadurch gekennzeichnet,**
**dass** unterschiedliche Servicebenachrichtigungen in Abhängigkeit der Schwere erkannter Fehlermeldungen oder zu erwartender Fehler erzeugt und im Fernwartungsrechner (2) abgespeichert werden.

6. Verfahren nach einem der Ansprüche 1 bis 5,
**dadurch gekennzeichnet,**
**dass** aufgrund der Servicebenachrichtigung auszutauschende Ersatzteile im Fernwartungsrechner (2) in einer Datei eingetragen werden.

7. Verfahren nach einem der Ansprüche 1 bis 6,
**dadurch gekennzeichnet,**
**dass** der vorgegebene Zeitpunkt nicht abgewartet wird, wenn ein Maschinenausfall vor dem vorgegebenen Zeitpunkt zu erwarten ist, und dass in diesem Fall im Fernwartungsrechner (2) eine entsprechende Störmarkierung gesetzt wird.

8. Verfahren nach einem der Ansprüche 1 bis 7,
**dadurch gekennzeichnet,**
**dass** der Zeitpunkt nach vorne verlegt wird, wenn sich eine höhere Ausfallwahrscheinlichkeit der Maschine (1) aufgrund der durch ergänzte Angaben zum Maschinenzustand aktualisierten Servicebenachrichtigung ergibt.

## Claims

1. Method for the maintenance of machines (1) with a machine computer using at least one remote service computer (2), wherein the remote service computer (2) receives information on the state of the machine (1) from the machine computer and enters them into a service ticket,
wherein the information transmitted to the remote service computer (2) at least contains information on a looming error in the machine (1),
wherein the remote service computer (2) calculates and provides data for avoiding or eliminating the looming error, and wherein a service message is created in a database (6) under control from the remote service computer (2) or by the machine computer when events occur that suggest that indicate that an error is looming, said database (6) communicating with the remote service computer (2),
**characterized**
**in that** the service message is processed by the remote service computer (2) at a specified point in time and in that up to this point in time, the service message is updated on the basis of information on the current state of the machine.

2. Method according to claim 1,
**characterized**
**in that** the operating condition of the machine (1) is checked at regular intervals by the machine computer.

3. Method according to claim 1 or 2,
**characterized**
**in that** on the basis of the service message, the remote service computer (2) creates a list of tasks to avoid the looming error or to enable required service operations on the machine (1).

4. Method according to claim 3,
**characterized**
**in that** the remote service computer (2) comprises an ERP system (6) and in that the calculated list of tasks is provided in the ERP system (6).

5. Method according to any one of claims 1 to 4,
**characterized**
**in that** different service messages are generated and saved on the remote service computer (2) as a function of the seriousness of the detected error messages or looming errors.

6. Method according to any one of claims 1 to 5,
**characterized**
**in that** based on the service message, replacement parts to be replaced are entered into a file on the remote service computer (2).

7. Method according to any one of claims 1 to 6,
**characterized**
**in that** the specified point in time is not waited for if a machine failure is to be expected before the specified point in time and in that in this case, a corresponding failure mark is set in the remote service computer (2).

8. Method according to any one of claims 1 to 7,
**characterized**
**in that** the point in time is advanced if the failure probability of the machine (1) increases because the service message has been updated with additional information on the state of the machine.

## Revendications

1. Procédé de maintenance de machines (1) avec un ordinateur de machine utilisant au moins un ordinateur de télémaintenance (2), pour lequel des informations relatives à l'état de la machine (1) sont transmises par l'ordinateur de machine à l'ordinateur de télémaintenance (2) et reprises dans une requête de service, pour lequel les informations transmises à l'ordinateur de maintenance (2) renferment au moins des informations sur un défaut potentiel de la machine (1) et pour lequel l'ordinateur de télémaintenance (2) calcule et met à disposition des données pour éviter ou éliminer le défaut potentiel, pour lequel une notification de service pilotée par l'ordinateur de maintenance (2) ou l'ordinateur de machine est créée, en cas d'événements pouvant être l'indice d'un défaut potentiel, dans une base de données (6) communiquant avec l'ordinateur de télémaintenance (2),
**caractérisé en ce que,**
la notification de service est traitée à une date/heure spécifiée prédéfinie par l'ordinateur de télémaintenance (2) et que, jusqu'à ce moment, la notification de service est mise à jour sur la base d'informations sur l'état actuel de la machine.

2. Procédé selon la revendication 1,
**caractérisé en ce que**
l'état de fonctionnement de la machine (1) est régulièrement enregistré à l'aide de l'ordinateur de machine.

3. Procédé selon la revendication 1 ou 2,
**caractérisé en ce que**
l'ordinateur de télémaintenance (2) établit sur la base de la notification de service une liste de tâches pour éviter le défaut potentiel ou permettre des opérations de maintenance nécessaires sur la machine (1).

4. Procédé selon la revendication 3,
**caractérisé en ce que**
l'ordinateur de télémaintenance (2) comprend un système ERP (6) et que la liste de tâches calculée est mise à disposition dans le système ERP (6).

5. Procédé selon l'une des revendications 1 à 4,
**caractérisé en ce que**
différentes notifications de service sont générées en fonction de la gravité des messages de dérangement détectés ou du défaut prévisible et enregistrées dans l'ordinateur de télémaintenance (2).

6. Procédé selon l'une des revendications 1 à 5,
**caractérisé en ce que**
les pièces de rechange devant être remplacées en raison de la notification de service sont consignées dans un fichier dans l'ordinateur de télémaintenance (2).

7. Procédé selon l'une des revendications 1 à 6,
**caractérisé en ce que**
la date/heure spécifiée n'est pas attendue si une défaillance de la machine est prévisible avant la date/heure spécifiée et que, dans ce cas, un repère de dérangement correspondant est enregistré dans l'ordinateur de télémaintenance (2).

8. Procédé selon l'une des revendications 1 à 7,
**caractérisé en ce que**
la date/heure est avancée s'il résulte de la notification de service actualisée par des indications complétées sur l'état de la machine une probabilité de dérangement plus élevée de la machine (1).
